# EUROPÄISCHE PATENTANMELDUNG

(11) **EP 0 571 060 A1**
(43) Veröffentlichungstag der Anmeldung: **24.11.1993**
(21) Anmeldenummer: 93250144.8
(22) Anmeldetag: 18.05.1993
(51) Int. Cl.: B41B 19/00

(54) **Verfahren und Vorrichtung zum Belichten von fotoempfindlichem Belichtungsmaterial**

(30) Priorität: 21.05.1992 DE 4217238
(71) Anmelder: Scangraphic PrePress Technology GmbH, D-22880 Wedel/Holstein (DE)
(72) Erfinder: Rubi, Horst, W-3500 Kassel-Baunatal (DE)
(74) Vertreter: Flaig, Siegfried, Dipl.-Ing.

(57) **Zusammenfassung**

Ein Verfahren zum Belichten von fotoempfindlichem Belichtungsmaterial (1) wird innerhalb eines lichtabgeschlossenen Gehäuses (2) ausgeführt, wobei das Belichtungsmaterial (1) in einer kreisbogenförmigen Ebene (3) in gleichbleibendem Abstand zu einer Mittellängsachse (4) liegt und wobei über den Laserstrahl (6) eines Lasers (5) von einem rotierenden Spiegel (9) abgelenkte Laser-Lichtstrahlen (10) in Form von, punktweisen Signalen als Belichtungsflecke auf das Belichtungsmaterial (1) belichtet werden.

Um die Aufzeichnungsgeschwindigkeit zu verdoppeln bzw. eine Bild- oder Textvorlage in der halben Zeit abzuarbeiten, wird vorgeschlagen, daß die aus dein Kollimator (8) achsparallel austretenden Lichtstrahlen (10) auf zumindest zwei unter einem Winkel (11) zur Mittellängsachse (4) angeordneten Spiegelflächen (12a und 12b) gelenkt werden, daß darauf die reflektierten, parallelen Lichtstrahlen (10) in einer Optik (13) fokussiert und radial auf die Fokussionsebene (14) der Belichtungsmaterial-Oberfläche (1a) rotierend umlaufend geschickt werden.

## Beschreibung

Es ist ein Verfahren und eine Vorrichtung bekannt zum Belichten von fotoempfindlichem Belichtungsmaterial innerhalb eines lichtabgeschlossenen Gehäuses.

Ein solches Gehäuse erfordert zumindest einen Eingangs- und/oder Ausgangsschlitz, so daß das bahnförmige Belichtungsmaterial durch denselben Schlitz eingeführt und wieder ausgeführt werden kann (DD 0 154 852) oder einen durch Rollenpaare im Innern des lichtabgeschlossenen Gehäuses auf einer Seite gebildeten Eingangs und eines gleich ausgebildeten Ausgangs auf der anderen Seite einer kreiszylindersegmentartigen Anlage für das bahnförmige Belichtungsmaterial (EP 0 126 469 B1).

Grundsäztlich wird das bahnförmige Belichtungsmaterial in eine kreisbogenförmige Ebene in einem genau gleichbleibenden Abstand zu einer Mittellängsachse gebracht. Das bekannte Verfahren arbeitet dabei in der Art, daß ein Laser einen Laserstrahl erzeugt, der über einen Lasermodulator in einen Kollimator gelenkt wird. Beim Austreten aus dem Kollimator wird der Laserstrahl auf einen rotierenden Spiegel gerichtet, der schräg zur Mittellängsachse angeordnet ist und von dort in Form von punktweisen Signalen als Belichtungsflecke auf das Belichtungsmaterial geworfen.

Im Grunde genommen hat sich dieses Verfahren bewährt, weil eine hohe Auflösung einer Bild- oder Textdarstellung in relativ kurzer Zeit auf das Belichtungsmaterial gebracht werden kann. Vorrichtungstechnisch ist die bekannte Vorrichtung geeignet, das Belichtungsmaterial in Bahnform zu verarbeiten, so daß bei Einfahren einer auf die belichtete Bahn folgenden Bahn ein hoher Automationsgrad erreicht werden kann. Nachteile entstehen bei diesem Verfahren jedoch dann, wenn die Anzahl der zu übertragenden Belichtungsflecke wächst und bei sehr speicherintensiven Abbildungen oder Texten das Belichten eine Zeitdauer in Anspruch nimmt, die Gegenstand von Kritik durch den Anwender der Belichtungsvorrichtungen sein könnte.

Der in Anspruch 1 und im Anspruch 4 angegebenen Erfindung liegt das Problem zugrunde, im Zuge der erhöhten Auflösung eines Bildes, d.h. bei sehr hohen Pixel-Zahlen ein schnelleres Übertragen der Signale zu erreichen, so daß hohe Aufzeichnungsgeschwindigkeiten erzielt werden können.

Die mit der Erfindung gemäß Anspruch 1 erzielten Vorteile bestehen insbesondere darin, daß eine Verdoppelung der die Belichtungsflecke übertragenden Lichtstrahlen entweder die Belichtungszeit halbiert oder in gleicher Zeit ein Abarbeiten einer doppelt so hohen Auflösung der Bilder oder Texte gestattet.

Eine besonders hohe Übertragungsgenauigkeit wird dadurch erzielt, daß die parallelen Lichtstrahlen des Kollimators auf Spiegelflächen gerichtet werden, die unter einem Winkel von 45 Grad zur Mittellängsachse angeordnet sind und zueinander einen Winkel von 90 Grad bilden.

Eine vorteilhafte Ausgestaltung der Erfindung ist in Anspruch 3 angegeben. Demgemäß wird vorgeschlagen, daß der erste radiale Belichtungsstrahl einer ersten Spiegelfläche auf den Teilumfang eines bogensegmentförmigen Belichtungsmaterials von 180 Grad und der radiale, zweite Belichtungsstrahl einer zweiten Spiegelfläche ebenfalls auf den Teilumfang des bogensegmentförmigen Belichtungsmaterials von 180 Grad und dort um einen festgelegten Spurenabstand versetzt belichtet wird. Hier wird erstmalig der Vorteil erreicht, volle 2 mal 180 Grad eines bogenförmigen Belichtungsmaterials zu belichten, währenddem von den 360 Grad einer Belichtungstrommel immer ein Abzug für die Eintritts- oder Austrittsöffnungsbreite zu machen ist, so daß früher der Umfang von 360 Grad = 2 mal 180 Grad nicht zu erreichen war.

Die Vorrichtung für ein Fotosetzgerät, in dessen kreisbogenförmigem, lichtabgeschlossenen Innenraum ein fotoempfindliches Belichtungsmaterial mittels eines Laserstrahls belichtbar ist, sieht einen Schlitten vor, der in Richtung der Mittellängsachse schrittweise oder kontinuierlich vorschiebbar ist und einen Laser trägt, dessen optische Achse mit der Mittellängsachse übereinstimmt. Der erzeugte Laserstrahl wird in einem Lasermodulator moduliert und über einen Kollimator, der die Lichtstrahlen aufweitet mit entsprechender Strahlenverteilung auf einen rotierbaren Spiegel gelenkt. Von dem Spiegel geht ein radialer, fokussierter, auf das Belichtungsmaterial gerichteter Belichtungsstrahl in Form von punktweisen Signalen als Belichtungsflecke, die die erwähnten Pixel erzeugen, aus.

Diese Vorrichtung wird nunmehr derart weiterentwickelt, daß in, Strahlengang auf den Kollimator folgend ein rotierbarer Spiegel mit zumindest zwei Spiegelflächen angeordnet ist, daß auf der Reflexionsachse jeder Spiegelfläche eine fokussierende Optik in radialem Abstand zur Mittellängsachse vorgesehen ist und daß der Fokussionspunkt jeweils auf die Oberfläche des Belichtungsmaterials einstellbar ist. Dadurch entstehen hintereinanderfolgende Lichtstrahlen, die sowohl jeweils einen 180 Grad-Bogen des Belichtungsmaterials belichten können oder aber einen 360 Grad-Bogen, d.h. das Innere einer Trommel. Es ist jedoch auch möglich, kleinere Bogensegmente unter 180 Grad zu belichten.

Eine solche Zusammenarbeit der beiden Belichtungsstrahlen wird insbesondere auch dadurch gefördert, daß jede der Spiegelflächen einen Winkel von 45 Grad zur Mittellängsachse bildet und daß die zwei Spiegelflächen am Umfang um 180 Grad versetzt sind.

Weitere Vorteile für die Abstimmung der beiden Belichtungsstrahlen ergeben sich dadurch, daß der mit mehreren Spiegelflächen ausgestattete rotierbare Spiegel mit einem Halter verbunden ist, der Außenringe für die Aufnahme von radial gleich beabstandeten fokussierenden Optiken bildet.

Ein besonderer Vorteil entsteht außerdem dadurch, daß die Außenringe des Halters und damit die fokussierenden Optiken parallel zur Mittellängsachse axial zueinander im Mikrometerbereich spielfrei verschiebbar bzw. einstellbar sind. Der Abstand der beiden Belichtungsstrahlen als Spur auf dem Belichtungsmaterial wird dadurch nur noch vom Vorschub des Schlittens, der den Laser trägt, abhängig.

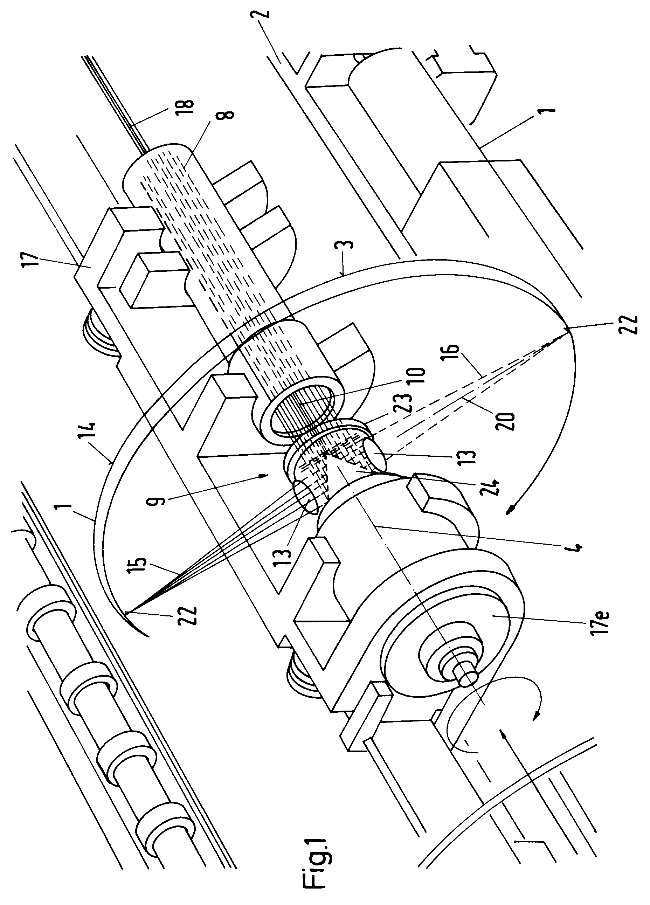

Ein Ausführungsbeispiel der Erfindung ist in der Zeichnung dargestellt und wird im folgenden für das Verfahren und die Vorrichtung näher beschrieben. Es zeigen
- Fig. 1: eine perspektivische Ansicht in das Innere des Gehäuses
(das weggelassen ist),
- Fig. 2: einen axialen Längsschnitt durch das kreisbogenförmige Gehäuse mit eingelegtem Belichtungsmaterial und
- Fig. 3: eine perspektivische Ansicht auf den Schlitten mit dem Strahlengang, ausgehend von dem Laser, dem Lasermodulator, dem Kollimator und dem Doppelspiegel.

Das Verfahren zum Belichten von fotoempfindlichem Belichtungsmaterial 1, das aus Bahnen, Platten, Streifen u.dgl. bestehen kann, findet innerhalb eines lichtabgeschlossenen Gehäuses 2 statt. Das Belichtungsmaterial, z.B. eine Filmbahn, liegt in einer kreisbogenförmigen Ebene 3 mit genau gleichbleibendem Abstand zu einer Mittellängsachse 4. Der gleichbleibende Abstand wird auch dadurch gewährleistet, daß unter dem Belichtungsmaterial, sofern dieses flexibel ist, keine Luftblasen, Hohlräume u.dgl. vorhanden sind.

Bei dem Verfahren erzeugt ein Laser 5 einen Laserstrahl 6, der über einen Lasermodulator 7, in dem das Laserlicht moduliert, d.h. in eine gewünschte Wellenform gebracht wird. Anschließend wird das Laserlicht in einen Kollimator 8 gelenkt und aus diesen, austretend auf einen rotierenden Spiegel 9 gerichtet. Der Spiegel 9 ist im Prinzip schräg zur Mittellängsachse 4 angeordnet. Ein die Signale übertragender Laser-Lichtstrahl 10 belichtet in Form von punktweisen Signalen als Belichtungsflecke in der Größenordnung von wenigen Mikron das Belichtungsmaterial 1.

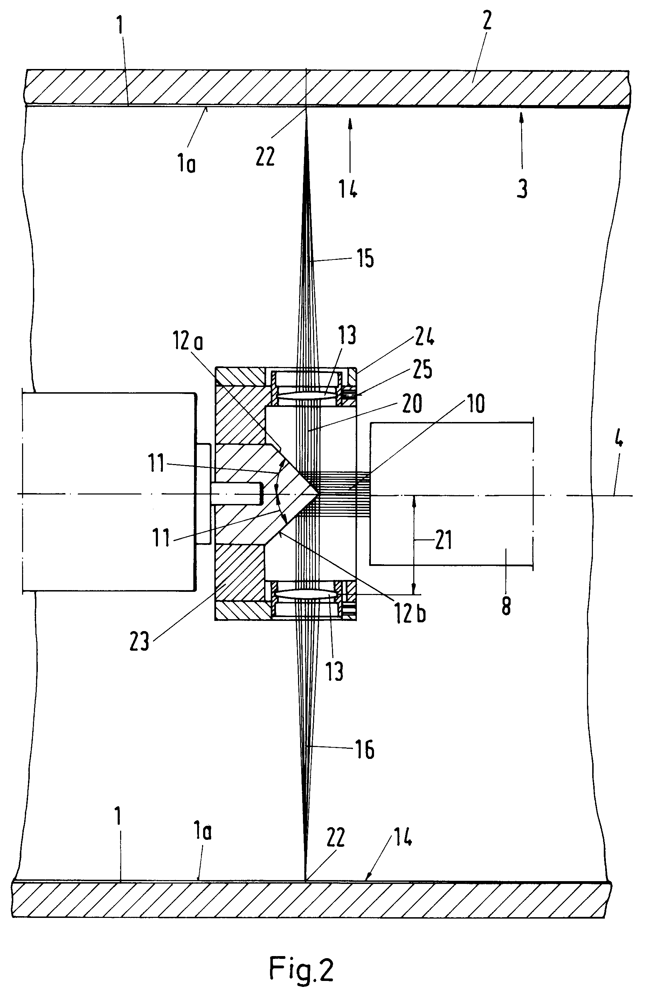

Gemäß der Erfindung werden die aus dem Kollimator 8 achsparallel austretenden Laser-Lichtstrahlen 10 auf zwei unter einem Winkel 11 (Fig. 2) zur Mittellängsachse 4 angeordnete Spiegelflächen 12a und 12b gelenkt, darauf werden die parallelen Laser-Lichtstrahlen 10 in einer Optik 13 fokussiert und radial auf eine Fukussionsebene 14 der Belichtungsmaterial-Oberfläche 1a rotierend umlaufend geworfen. Hierbei treffen die parallelen Lichtstrahlen 10 des Kollimators 8 auf den Spiegelflächen 12a und 12b, die unter einem Winkel 11 von jeweils 45 Grad zur Mittellängsachse 4 angeordnet sind und zueinander einen Winkel von 90 Grad bilden, d.h. aufeinander senkrecht stehen.

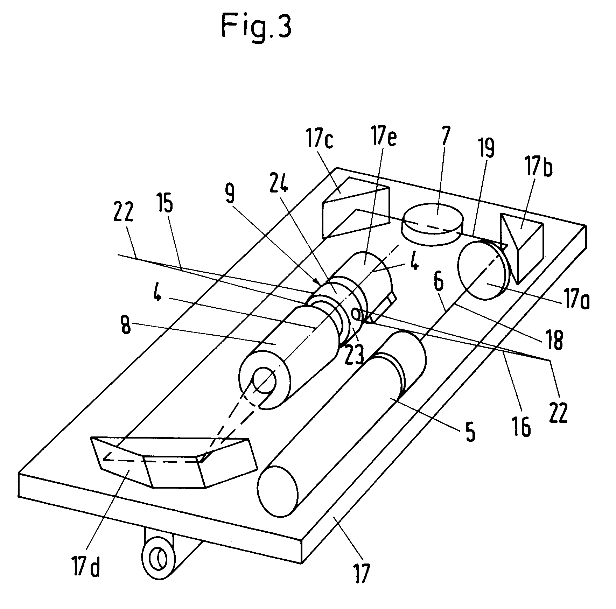

Das Verfahren kann nunmehr so ausgeübt werden, daß ein erster Belichtungsstrahl 15 einer ersten Spiegelfläche 12a auf den Teilumfang eines bogensegmentförmigen Belichtungsmaterials 1 von 180 Grad und ein radialer, zweiter Belichtungsstrahl 16 der zweiten Spiegelfläche 12b ebenfalls auf den Teilumfang des bogensegmentförmigen Belichtungsmaterials 1 von 180 Grad und dort um einen festgelegten Spurenabstand versetzt belichtet wird. Gemäß Fig. 3 ist ein Schlitten 17 als Träger für den Laser 5 ausgebildet. Eine optische Achse 18 des Lasers 5 stimmt mit der Mittellängsachse 4 überein. Der erzeugte Laserstrahl 6 wird in dein Lasermodulator 7 moduliert und über den Kollimator 8 auf die rotierbare erste Spiegelfläche 12a und die zweite Spiegelfläche 12b gelenkt. Von den Spiegelflächen 12a und 12b wird jeweils ein fokussierter Belichtungsstrahl 15 bzw. 16 in Form von den erwähnten punktweisen Signalen als Belichtungsflecke von ca. 6 bis 15 Mikron auf das Belichtungsmaterial belichtet.

In einem Strahlengang 19 folgt auf den Kollimator 8 der rotierbare Spiegel 9 mit den zwei Spiegelflächen 12a und 12b, wobei auf einer Reflexionsachse 20 in einem gleichgroßen radialen Abstand 21 zu der Mittellängsachse 4 die fokussierende Optik 13 befestigt ist, und zwar derart, daß der Fokussionspunkt 22 jeweils auf die Oberfläche 1a des Belichtungsmaterials 1 eingestellt ist. Dadurch, daß jede der Spiegelflächen 12a und 12b der, Winkel 11 von 45 Grad zur Mittellängsachse 4 bilden und daß die zwei Spiegelflächen 12a und 12b am Umfang um 180 Grad versetzt sind, können Spurabstände von wenigen Mikron auf dein Belichtungsmaterial 1 belichtet werden.

Ein aufgrund des Vorschubs des Schlittens 17 mit einem Graufilter 17a, einem ersten Umlenkspiegel 17b, einem zweiten Umlenkspiegel 17c und einem dritten Umlenkspiegel 17d bei gleichbleibender Drehgeschwindigkeit der durch einen Motor 17e um die Mittellängsachse 4 angetriebenen Spiegelflächen 12a und 12b, erfolgt eine sehr genaue Belichtung Spalte neben Spalte auf dem Belichtungsmaterial 1.

Eine Korrektur oder eine gewünschte Justierung wie auch ein gewollter Spaltenabstand, der der Vorschubgeschwindigkeit des Motors 17e überlagert werden kann, ergibt sich dadurch, daß der mit den Spiegelflächen 12a und 12b ausgestattete rotierbare Spiegel 9 mit einem Halter 23 verbunden ist, der Außenringe 24 und 25 für die Aufnahme von radial gleichbeabstandeten fokussierenden Optiken 13 bildet (Fig. 2). Die Außenringe 24 und 25 des Halters 23 tragen die fokussierenden Optiken 13 und sind parallel zur Mittellängsachse 4 axial zueinander im Bereich von wenigen Mikron spielfrei vorschiebbar und wie gezeichnet deckungsgleich eingestellt, so daß gemäß Fig. 2 lediglich die Vorschubgeschwindigkeit des Schlittens 17 zur Wirkung kommt. Die Drehgeschwindigkeit des Motors 17e liegt über 10.000 Umdrehungen/min.

### Bezugszeichenliste

- 1: Belichtungsmaterial
- 1a: Oberfläche des Belichtungsmaterials
- 2: Gehäuse
- 3: Ebene, kreisbogenförmige
- 4: Mittellängsachse
- 5: Laser
- 6: Laserstrahl
- 7: Lasermodulator
- 8: Kollimator
- 9: Spiegel, rotierend
- 10: Lichtstrahlen
- 11: Winkel
- 12a: Spiegelfläche, erste
- 12b: Spiegelfläche, zweite
- 13: Optik, fokussierende
- 14: Fokussionsebene
- 15: Belichtungsstrahl, erster
- 16: Belichtungsstrahl, zweiter
- 17: Schlitten
- 17a: Graufilter
- 17b: Umlenkspiegel
- 17c: Umlenkspiegel
- 17d: Umlenkspiegel
- 17e: Motor
- 18: Laser-Achse
- 19: Strahlengang
- 20: Reflexions-Achse
- 21: Abstand, radialer
- 22: Fokussionspunkt
- 23: Halter
- 24: Außenring
- 25: Außenring

## Patentansprüche

1. Verfahren zum Belichten von fotoempfindlichem Belichtungsmaterial (1) innerhalb eines lichtabgeschlossenen Gehäuses (2), wobei das Belichtungsmaterial (1) in einer kreisbogenförmigen Ebene (3) in gleichbleibendem Abstand zu einer Mittellängsachse (4) liegt, bei dem ein Laser (5) einen Laserstrahl (6) erzeugt, der über einen Lasermodulator (7) in einen Kollimator (8) gelenkt und aus diesem austretend auf einen rotierenden Spiegel (9) gerichtet wird, der schräg zur Mittellängsachse (4) angeordnet ist und von dort in Form von punktweisen Signalen als Belichtungsflecke auf das Belichtungsmaterial (1) belichtet wird,
dadurch gekennzeichnet,
daß die aus dem Kollimator (8) achsparallel austretenden Lichtstrahlen (10) auf zumindest zwei unter einen Winkel (11) zur Mittellängsachse (4) angeordneten Spiegelflächen (12) gelenkt werden, daß darauf die reflektierten parallelen Lichtstrahlen (10) in einer Optik (13) fokussiert und radial auf die Fokussions-Ebene (14) der Belichtungsmaterial-Oberfläche (1a) rotierend umlaufend geschickt werden.

2. Verfahren nach Anspruch 1,
dadurch gekennzeichnet,
daß die parallelen Lichtstrahlen (10) des Kollimators (8) auf Spiegelflächen (12a,12b) gerichtet werden, die unter einem Winkel (11) von 45 Grad zur Mittellängsachse (4) angeordnet sind und zueinander einen Winkel von 90 Grad bilden.

3. Verfahren nach den Ansprüchen 1 oder 2,
dadurch gekennzeichnet,
daß der erste radiale Belichtungsstrahl (15) einer ersten Spiegelfläche (12a) auf den Teilumfang eines bogensegmentförmigen Belichtungsmaterials (1) von 180 Grad und der radiale, zweite Belichtungsstrahl (16) einer zweiten Spiegelfläche (12b) ebenfalls auf den Teilumfang des bogensegmentförmigen Belichtungsmaterials (1) von 180 Grad und dort um einen festgelegten Spurenabstand versetzt belichtet wird.

4. Vorrichtung für ein Fotosetzgerät, in dessen kreisbogenförmigem, lichtabgeschlossenem Innenraum ein fotoempfindliches Belichtungsmaterial (1) mittels eines Laserstrahls (6) belichtbar ist, wobei ein Schlitten (17), der in Richtung der Mittellängsachse vorschiebbar ist, einen Laser (5) trägt, dessen optische Achse (18) mit der Mittellängsachse (4) übereinstimmt, wobei der erzeugte Laserstrahl (6) in einem Lasermodulator (7) moduliert wird und über einen Kollimator (8) auf einen rotierbaren Spiegel (9) lenkbar ist, von dem aus ein radialer, fokussiert auf das Belichtungsmaterial (1) gerichteter Belichtungsstrahl in Form von punktweisen Signalen als Belichtungsflecke ausgeht,
dadurch gekennzeichnet,
daß im Strahlengang (19) auf den Kollimator (8) folgend ein rotierbarer Spiegel (9) mit zumindest zwei Spiegelflächen (12a,12b) angeordnet ist, daß auf der Reflexionsachse (20) jeder Spiegelfläche (12a,12b) eine fokussierende Optik (13) in radialem Abstand (21) zur Mittellängsachse (4) vorgesehen ist und daß der Fokussionspunkt (22) jeweils auf die Oberfläche (1a) des Belichtungsmaterials (1) einstellbar ist.

5. Vorrichtung nach Anspruch 4,
dadurch gekennzeichnet,
daß jede der Spiegelflächen (12a,12b) einen Winkel (11) von 45 Grad zur Mittellängsachse (4) bildet und daß die zwei Spiegelflächen (12a,12b) dm Umfang um 180 Grad versetzt sind.

6. Vorrichtung nach einem der Ansprüche 4 oder 5,
dadurch gekennzeichnet,
daß der mit mehreren Spiegelflächen (12a,12b) ausgestattete rotierbare Spiegel (9) mit einem Halter (23) verbunden ist, der Außenringe (24,25) für die Aufnahme von radial gleich beabstandeten fokussierende Optiken (13) bildet.

7. Vorrichtung nach einem der Ansprüche 4 bis 6,
dadurch gekennzeichnet,
daß die Außenringe (24,25) des Halters (23) und damit die fokussierenden Optiken (13) parallel zur Mittellängsachse (4) axial zueinander im Mikrometerbereich spielfrei verschiebbar bzw. einstellbar sind.
